(19) Europäisches Patentamt

European Patent Office

Office européen des brevets

(11) **EP 4 478 100 A1**

(12) **EUROPEAN PATENT APPLICATION**

(43) Date of publication:
**18.12.2024 Bulletin 2024/51**

(21) Application number: **23178785.4**

(22) Date of filing: **12.06.2023**

(51) International Patent Classification (IPC):
**G02B 6/28** $^{(2006.01)}$

(52) Cooperative Patent Classification (CPC):
**G02B 6/2813**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventors:
• **Eriksson, Matias
  33560 Tampere (FI)**
• **Fickler, Robert
  33500 Tampere (FI)**
• **Stickler, Benjamin
  40227 Düsseldorf (DE)**

(74) Representative: **Zinsinger, Norbert
Louis Pöhlau Lohrentz
Patentanwälte Partnerschaft mbB
P.O.Box 30 55
90014 Nürnberg (DE)**

(54) **APPARATUS AND METHOD FOR POWER SPLITTING**

(57)    The present invention discloses an apparatus, comprising: a step-index multimode waveguide (110) having a cylinder shape with a core radius (R) and a length (*l*), and means for coupling (120) an incident laser beam onto the step-index multimode waveguide (110); wherein, approximately 70% of the power of the incident laser beam remains in a region where the distance to the radial center of the step-index multimode waveguide (110) is higher than approximately 0.5 of the core radius (R) during propagation in the step-index multimode waveguide (110), and the length of the step-index multimode waveguide (110) is m/n of the Talbot distance, wherein, m and n are coprime integer numbers, and the Talbot distance is related to the wavelength of the incident laser beam and the core radius of the step-index multimode waveguide (110).

110

130

120

100

Fig. 1

EP 4 478 100 A1

## Description

Field of the invention

Various example embodiments relate to optics, specifically to apparatus and method for power splitting.

Background

Beam splitter devices can be used, for example, to multiplex optical channels in optical communication networks, to split an optical communication channel into multiple copies of itself, or to split the power of a laser beam into multiple beams, to e.g. share a single pump laser across many optically pumped amplifiers. The latter could be especially useful in spatially multiplexed optical telecommunication networks (multi-core fiber), where multiple channels need parallel amplification.

High-order beam splitters are complicated devices with currently available technologies, typically built by cascading multiple lower-order beam splitters or by using specially manufactured Multi-Mode Interference (MMI) couplers using rectangular waveguides. The approach using cascaded lower-order beam splitters requires a network of many precisely aligned lower-order beam splitters, increasing the cost and reliability of such a device due to the high number of components and precision needed to manufacture it. The MMI couplers on the other hand require very specialized processes to manufacture, increasing the cost of using such components.

Furthermore, it has been shown that MMI couplers based on the standard rectangular waveguides suffer from unbalanced power splitting when increasing the number of input and output ports.

The inventor's previous study "Talbot self-imaging and two-photon interference in ring-core fibers" shows a cylindrical Talbot effect and its beam splitting applications implemented in ring-core fibers. Ring-core fibers, however, are produced through a very specialized manufacturing process, and therefore are not a desirable platform for commercial products.

There is thus a need for an improved apparatus for power splitting to solve the aforementioned problems.

Summary of the Invention

An objective of the invention is to provide an apparatus and a method for power splitting with increased reliability but reduced cost and complexity, while providing balanced power distribution.

According to a first aspect of the invention, there is provided an apparatus, comprising a step-index multimode waveguide having a cylinder shape with a core radius (R) and a length ($l$), and means for coupling an incident laser beam onto the step-index multimode waveguide; wherein, approximately 70% of the power of the incident laser beam remains in a region where the distance to the radial center of the step-index multimode waveguide is higher than approximately 0.5 of the core radius (R) during propagation in the step-index multimode waveguide, and the length of the step-index multimode waveguide is m/n of the Talbot distance, wherein, m and n are coprime integer numbers, and the Talbot distance is related to the wavelength of the incident laser beam and the core radius of the step-index multimode waveguide.

According to a second aspect of the invention, there is provided a method comprising: coupling an incident laser beam onto a step-index multimode waveguide having a cylinder shape with a core radius (R) and a length ($l$); wherein, approximately 70% of the power of the incident laser beam remains in a region where the distance to the radial center of the step-index multimode waveguide is higher than approximately 0.5 of the core radius (R) during propagation in the step-index multimode waveguide; and the length of the step-index multimode waveguide is m/n of the Talbot distance, wherein, m and n are coprime integer numbers, and the Talbot distance is related to the wavelength of the incident laser beam and the core radius of the step-index multimode waveguide.

Unlike high-order beam splitters based on a network of low-order beam splitters, various embodiments require just a single, simple piece of multi-mode fiber (MMF), providing a very simple solution to high-order beam splitting, therefore improving the reliability, and decreasing the cost of the beam splitter. On the other hand, MMI couplers based on rectangular waveguides require specialized manufacturing processes, increasing the cost of such devices. Various embodiments rely on the well-established step-index MMF technology. MMFs are easily available in large quantities, very affordable prices and with a multitude of different available fiber parameters, and various embodiments require no further processing of the fibers aside from cleaving pieces of desired lengths. Furthermore, balanced power distribution can be obtained using various embodiment.

Brief description of the figures

For a more complete understanding of example embodiments of the present invention, reference is now made to the following descriptions taken in connection with the accompanying drawings in which:

> Figure 1 shows a schematic block diagram of one embodiment of the apparatus 100;
> Figure 2 shows a schematic block diagram of another embodiment of the apparatus 200;
> Figure 3 shows a flow diagram of one example method according to an embodiment;
> Figure 4 shows a schematic view of the Talbot self-imaging phenomenon according to one embodiment;
> Figure 5a and Figure 5b show camera images taken at the output facet according to two different embodiments;

Figure 6a and Figure 6b show the power distribution related to the embodiment shown in Figure 5a.

Same or similar reference numerals refer to same or similar parts or components.

Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

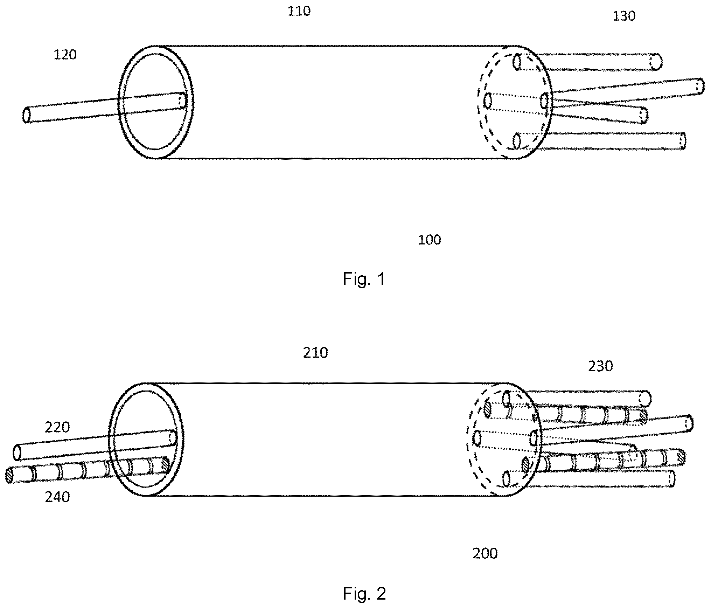

Figure 1 shows a schematic block diagram of one embodiment of the apparatus 100.

In the embodiment of Figure 1, the apparatus 100 comprises a step-index multimode waveguide 110 having a cylinder shape with a core radius R and a length *l*. In the embodiment of Figure 1, the step-index multimode waveguide 110 having a cylinder shape may be implemented as a step-index multimode fiber 110. In other embodiments, the waveguide may take other forms, for example, cylinder shaped waveguide in photonic chip (photonic integrated circuit). In the following, the wording of fiber and waveguide may be used interchangeably.

The apparatus 100 further comprises means for coupling 120 an incident laser beam onto the step-index multimode waveguide 110.

Normally, the incident laser beam may have a Gaussian intensity profile. Alternatively, the incident laser beam may have other intensity profile.

In one embodiment, the input light field may be circularly polarized. In another embodiment, the input light field may have arbitrary polarization. For example, the input light field may have linear polarization.

Specifically, the means for coupling 120 may comprise means for fixing a laser source and/or means for adjusting incidence angle and/or incidence point of the incidence laser beam onto the step-index multimode fiber 110. For example, the means for coupling 120 may comprise lenses and/or other optics.

Specifically, the means for coupling 120 may comprise a single mode fiber (SMF) 120. The single mode fiber 120 may be glued to the step-index multimode fiber 110, as in the embodiment shown in Figure 1. In other embodiments, the single mode fiber 120 may be attached to the step-index multimode fiber 110 using other ways. For example, interfacing with the SMFs can also be done using some free-space imaging optics (a 4-f imaging system), or by bringing the SMFs to direct contact with the MMF, for instance by fusing the fibers together.

In one example, one SMF is used as an input port, which was coupled to a step-index MMF piece with a 100-micron core radius, via a simple 4f imaging system without magnification.

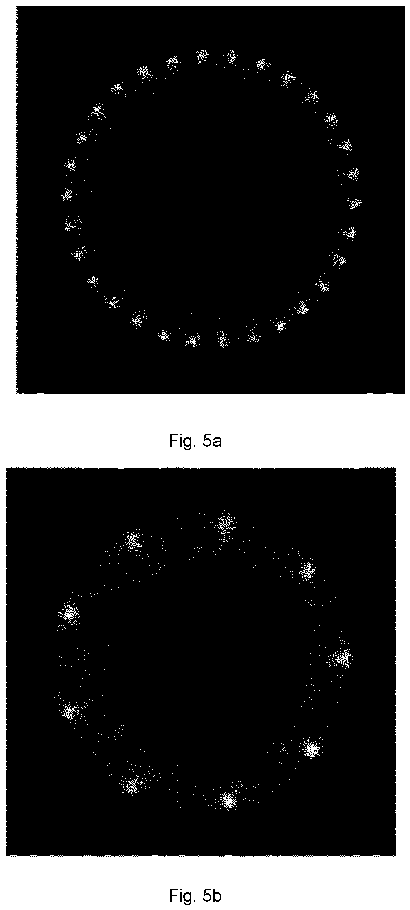

In one embodiment, as will be further elaborated with respect to Figure 5a, approximately 95% of the power of the incident laser beam remains in a region where the distance to the radial center of the step-index multimode waveguide 110 is higher than approximately 0.8 of the core radius R during propagation in the step-index multimode waveguide 110, estimated from camera images.

In another embodiment, as will be further elaborated with respect to Figure 5b, approximately 91% of the power of the incident laser beam remains in a region where the distance to the radial center of the step-index multimode waveguide 110 is higher than approximately 0.75 of the core radius R during propagation in the step-index multimode waveguide 110, estimated from camera images.

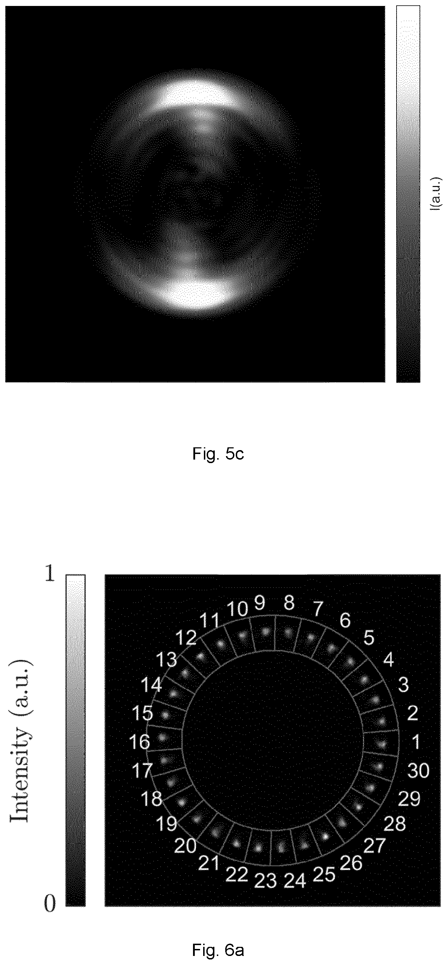

In yet another embodiment, as will be further elaborated with respect to Figure 5c, approximately 80% of the power of the incident laser beam remains in a region where the distance to the radial center of the step-index multimode waveguide 110 is higher than approximately 0.6 of the core radius R during propagation in the step-index multimode waveguide 110, based on simulation results.

For high order power splitting, for example, for 1 to n power splitting, $n \geq 8$ may be interpreted as high order power splitting, approximately 90% of the power of the incident laser beam remains in a region where the distance to the radial center of the step-index multimode waveguide 110 is higher than approximately 0.7 of the core radius R during propagation in the step-index multimode waveguide 110.

Generally, power splitting is possible with approximately 70% of the power of the incident laser beam remains in a region where the distance to the radial center of the step-index multimode waveguide 110 is higher than approximately 0.5 of the core radius R during propagation in the step-index multimode waveguide 110.

Generally, when the majority of the power of the incident laser beam remains in a region close to the core-cladding boundary during propagation, it means the incident laser beam is coupled onto whispering gallery modes of the step-index multimode fiber 110. Possible power loss, for example, the power that may leak out of the fiber during propagation through the fiber does not affect the operation of the apparatus 100.

In one embodiment, the means for coupling 120 is configured to couple the incident laser beam onto whispering gallery modes of the step-index multimode waveguide 110.

Specifically, the means for coupling 120 is configured to couple the incident laser beam onto the step-index multimode waveguide 110 to excite its whispering-gallery modes so as to trigger the Talbot self-imaging phenomenon.

The quadratic dispersion relation of the excited whispering-gallery modes enables the Talbot self-imaging effect, which produces revivals of the input field structure upon propagation through the fiber. These revivals consist of, in general, multiple copies of the initial field structure. Therefore, by determining the fiber length based on the desired number n of output beams and the Talbot distance, a single input beam can be split into multiple copies of itself. Higher numbers of output beams may be realized with shorter fibers, demonstrating the favorable scalability of the device.

Generally, the whispering gallery modes of the step-index multimode waveguide 110 are eigenmodes with the lowest radial mode index and azimuthal mode index $|L| > 0$, in particular $|L| \geq 10$.

The incidence laser beam is coupled to a plurality of whispering gallery modes, each of which is identified with its own azimuthal mode index $|L|$.

Specifically, in one embodiment, the mean value of the azimuthal mode indices $|L|$ of the whispering gallery modes may be determined based on the core radius R of the step-index multimode waveguide 110.

Furthermore, the means for coupling 120 is configured to couple the incident laser beam to the step-index multimode waveguide 110 with an incidence angle $\alpha$ titled from the normal direction of the cross section towards the azimuthal direction of the step-index multimode waveguide 110, wherein, $\alpha > 0°$, in particular $\alpha > 2°$..

In one embodiment, the incidence angle $\alpha$ is determined to excite the whispering gallery modes of the step-index multimode waveguide 110.

In the embodiment where single mode fiber 120 is used as the means for coupling 120, transversely Gaussian fields compatible with SMFs can be quite efficiently coupled to the whispering gallery modes of an MMF. As the input- and output beams are inclined with respect to the MMF, the corresponding SMFs may be inclined accordingly.

In one embodiment, the means for coupling 120 is configured to couple the incident laser beam to the step-index multimode waveguide 110 at an incidence point within a range from approximately 0.6 of the core radius R to the core-cladding boundary of the step-index multimode waveguide 110.

Specifically, the incidence point together with the incidence angle $\alpha$ may be determined to excite the whispering gallery modes of the step-index multimode waveguide 110.

Generally, the incidence point may be close to the core-cladding boundary of the step-index multimode waveguide 110 to a maximum possible extend.

Furthermore, the mean value of the azimuthal mode indices $|L|$ of the whispering gallery modes may be determined based on the incidence angle $\alpha$, and the incidence point.

In one embodiment, approximately 75% of the power of the incidence laser beam is within a radius that is less than approximately 0.4 of the core radius of the step-index multimode waveguide 110.

In other words, the radius of the incidence laser beam may be less than approximately 0.4 of the core radius R of the step-index multimode waveguide 110. For example, when the incidence laser beam has a Gaussian intensity profile, radius of the incidence laser beam may be determined according to the range where the beam has $1/e^2$ of peak intensity.

In one embodiment, as will be further elaborated with respect to Figure 5a, the step-index multimode fiber 110 has a core radius of 100 micrometers, the input beam is a Gaussian beam with a $1/e^2$ radius of 3,1 micrometers.

In one embodiment, as will be further elaborated with respect to Figure 5b, the step-index multimode fiber 110 has a core radius of 52.5 micrometers, the input beam is a Gaussian beam with a $1/e^2$ radius of 2.3 micrometers.

In one embodiment, as will be further elaborated with respect to Figure 5c, the step-index multimode fiber 110 has a core radius of 28.5 micrometers, the input beam is a Gaussian beam with a $1/e^2$ radius of 10 micrometers.

Further according to the embodiment of Figure 1, the length of the step-index multimode waveguide 110 is m/n of the Talbot distance, wherein, m and n are coprime integer numbers.

Specifically, number n indicates the desired number of output beams corresponding to the revivals of the incidence laser beam. In one embodiment, the step-index multimode waveguide 110 comprises a near end and a far end, and wherein, the means for coupling 120 is configured to couple the incident laser beam to the near end of the step-index multimode waveguide 110, and n output beams are obtained at the far end of the step-index multimode waveguide 110. In one example embodiment, $n \geq 2$.

In this case, the apparatus 100 may be used as a beam splitter for splitting one incidence laser beam into n output beams. Advantageously, m/n < 1. In this case, the energy loss is minimized and the efficiency of the power splitter is maximized.

In the example of Figure 1, the case of 4-fold self-imaging is depicted, where the incident beam is self-imaged onto 4 distinct spots at the output, which act as output ports of a beam splitter.

The Talbot distance is related to the wavelength of the incident laser beam and the core radius of the step-index multimode waveguide 110. Specifically, the Talbot distance may be half of the distance where the phases of the excited eigenmodes are the closest to being coalescent. This distance may be within 0.7 and 1.2 (typically 0.95-1.05) of the idealized Talbot distance of light propagating in an infinitesimally thin cylinder shell with radius R, defined as:

$$z_T = 2\pi k R^2,$$

Wherein, k is the wave number in the waveguide core, R is the core radius of the step-index multimode waveguide 110.

In one embodiment, the length of the step-index multimode waveguide 110 is determined based on the number n.

Specifically, in one example, the wavelength of the incidence laser may be fixed. The length of the step index multimode fiber 110 may be cut precisely to fit for the length determined according to the desired number n of output beams, so that the length of the step-index multimode fiber is m/n of the Talbot distance.

In another example, the step index multimode fiber 110 may be manufactured with fixed length or variable length with less accuracy. In this case, the wavelength of the incidence laser may be adjusted according to the desired number n of output beams, so that the length of the step-index multimode fiber 110 is m/n of the Talbot distance. Advantageously, the length of step index multimode fiber 110 may be cut with less accuracy.

Further according to the embodiment of Figure 1, the apparatus may further comprise a further single mode fiber 130, configured to couple to the step-index multimode waveguide 110 to receive an output beam.

In an example, this may be done to estimate the overall the power efficiency of the power splitter interfaced with SMFs. Experiments are carried out for an example implementation with n=30, wherein results show an efficiency estimate of ~44% from the input SMF to the output SMF, while compensating for the 30-fold decrease in power due to the splitting operation.

The apparatus may comprise n number of single mode fibers 130 respectively configured to couple to the step-index multimode waveguide 110 to receive an output beam. The single mode fiber 130 may be coupled to the step-index multimode fiber 110 in a similar way as described with respect to the single mode fiber 120.

In other embodiments, the apparatus 100 may comprise other means coupled to the step-index fiber 110 for receiving respective output beams.

Figure 2 shows a schematic block diagram of another embodiment of the apparatus 200.

The apparatus 200 has similar parts as described with respect to Figure 1. Those similar parts will not be elaborated here for simplicity.

As shown in the embodiment of Figure 2, the apparatus 200 may further comprise further means for coupling 240 a further incident laser beam onto the step-index multimode waveguide 210. The further means for coupling 240 may be single mode fiber 240 drawn as cylinder marked with stripes.

Similar as the incidence laser beam in the previous embodiment, approximately 70% of the power of the further incident laser beam remains in said region during propagation in the step-index multimode waveguide 210 in the embodiment shown in Figure 2. The alternative regions mentioned above with respect the embodiment of Figure 1 apply for the further incidence laser beam as well.

[0063] , The length of the step-index multimode waveguide 210 is m'/n' of the Talbot distance corresponding to the wavelength of the further incident laser beam, wherein, m' and n' are coprime integer numbers.

Here, n' indicates the desired number of output beams corresponding to the revivals of the further incident laser beam. n and n' may be configured to have different or same value. In one example embodiment, n'≥2.

It is also possible to configure more than two incident laser beams. The desired number of output laser beams is not necessarily the same for different incidence laser beams. For example, it is possible that n≠n' for the embodiment with two incidence laser beams as indicated in Figure 2. In another embodiment, the desired number of output laser beams may be the same for different incidence laser beams, for example n=n' for two incidence laser beams.

As shown in Figure 2, the apparatus 200 may comprise further single mode fiber 250, drawn as cylinders marked with stripes, coupled to the step-index multimode fiber 210 to receive the output beams corresponding to the further incidence beam. In another embodiment, apparatus 200 may comprise other means coupled to the step-index multimode fiber 210 to receive the respective output beams corresponding to the further incidence beam. Although in the example shown in Figure 2, the output ports corresponding to the further incidence beam are different from those corresponding to the incidence beam, in another example, their output ports may overlap, provided the incidence angle of the different incidence laser beams are matched.

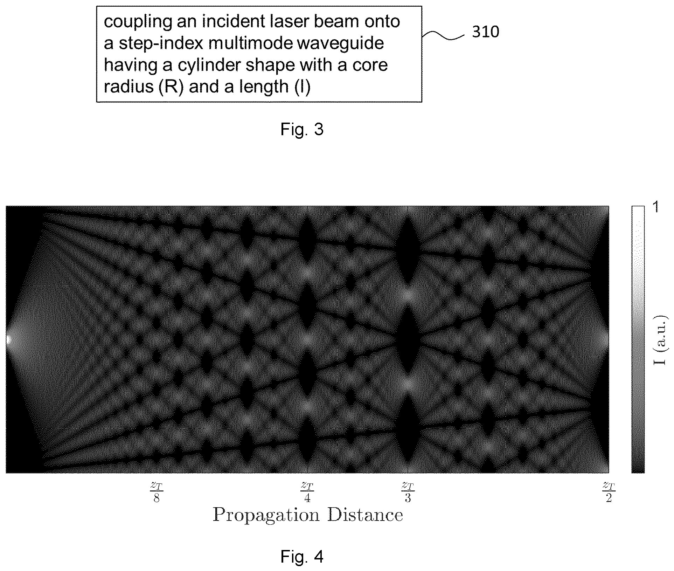

Figure 3 shows a flow diagram of one example method according to an embodiment.

The method starts with step S310, an incident laser beam is coupled to a step-index multimode waveguide having a cylinder shape with a core radius R and a length *l*.

Approximately 70% of the power of the incident laser beam remains in a region where the distance to the radial center of the step-index multimode waveguide is higher than approximately 0.5 of the core radius R during propagation in the step-index multimode waveguide.

The length of the step-index multimode waveguide is m/n of the Talbot distance, wherein, m and n are coprime integer numbers, and the Talbot distance is related to the wavelength of the incident laser beam and the core radius of the step-index multimode waveguide.

Although not shown in Figure 3, the method may additionally comprise a step of determining the length of the step-index multimode waveguide based on the desired number of output beams and the Talbot distance.

Figure 4 shows a schematic view of the Talbot self-imaging phenomenon according to one embodiment.

The quadratic dispersion relation of the excited whispering-gallery modes enables the Talbot self-imaging effect with respect to the azimuthal angle. At specific propagation distances through the fiber, fractional images of the incident field can be seen, consisting of multiple copies of the initial field.

Specifically, in Figure 4, vertical axis depicts the relevant transverse degree of freedom (here, the azimuthal angle in the cylindrical geometry), and horizontal axis depicts the propagation distance. Upon propagation of the field, fractional images of the initial field appear, seen as multiple copies of the initial, localized field structure. At fractions of the Talbot distance m z_T/n, n copies of the initial field appear (given coprime m and n). See for example the distance z_T/4, where 4 copies of the initial localized spot are present. By varying the propagation distance, the number of output spots can be arbitrarily chosen up to a certain resolution limit.

Figure 5a and Figure 5b show camera images taken at the output facet of two different MMF pieces according to two embodiments.

Figure 5a is an output image of an approximately 2.4cm long piece of MMF with a 100 micrometres core radius, with an incident field consisting of a single localized spot at the edge of the MMF core. In this embodiment, wavelength of the incidence laser beam is 786nm in air, 541 nm in fiber core. The MMF has split the single input spot into 30 output spots, realizing a 1-to-30 beam splitter. In this embodiment, the incidence angle $\alpha$ may be 5°-15°.

Figure 5b similarly realized 1-to-9 beam splitting with an approximately 2.3cm long piece of MMF with a 52.5-micron core radius. In this embodiment, wavelength of the incidence laser beam is 790nm in air, 544nm in fiber core. In this embodiment, the incidence angle $\alpha$ may be 5°-15°.

Figure 5c similarly simulated 1-to-2 beam splitting with an approximately 2.4cm long piece of MMF with a 28.5-micron core radius. In this embodiment, wavelength of the incidence laser beam is 780nm in air, 532nm in fiber core. In this embodiment, the incidence angle $\alpha$ may be 1.5°.

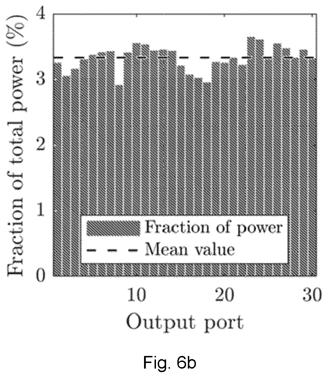

Figure 6a together with Figure 6b show the power distribution related to the embodiment shown in Figure 5a.

Specifically, as shown in Figure 6a, the output image was divided into 30 regions. Figure 6b shows the relative power values obtained for all regions for example by integrating the pixel values of all regions individually.

As can be seen from Figure 6b, the power distribution across the output beams is uniform.

Without in any way limiting the scope, interpretation, or application of the claims appearing below, a technical effect of one or more of the example embodiments disclosed herein is that it can be realized using standard step-index multimode fibers, which are already mass-manufactured, and very affordable in large quantities. Various embodiments can be implemented at a very low cost and very high quality. Furthermore, balanced power distribution can be obtained using various embodiment.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. An apparatus (100, 200), comprising:

   a step-index multimode waveguide (110, 210) having a cylinder shape with a core radius (R) and a length (*l*), and
   means for coupling (120, 220) an incident laser beam onto the step-index multimode waveguide (110, 210);
   wherein, approximately 70% of the power of the incident laser beam remains in a region where the distance to the radial center of the step-index multimode waveguide (110, 210) is higher than approximately 0.5 of the core radius (R) during propagation in the step-index multimode waveguide (110, 210),
   and the length of the step-index multimode waveguide (110, 210) is m/n of the Talbot distance, wherein, m and n are coprime integer numbers, and the Talbot distance is related to the wavelength of the incident laser beam and the core radius of the step-index multimode waveguide (110, 210).

2. The apparatus according to claim 1, wherein the means for coupling (120, 220) is configured to couple the incident laser beam onto whispering gallery modes of the step-index multimode waveguide (110, 210).

3. The apparatus according to the preceding claim, wherein, the whispering gallery modes are eigenmodes with the lowest radial mode index and azimuthal mode index |L|>0, in particular |L|≥10.

4. The apparatus according to the preceding claim, wherein, the mean value of the azimuthal mode indices |L| of the whispering gallery modes is determined based on the core radius (R) of the step-index multimode waveguide (110, 210).

5. The apparatus according to any preceding claim, wherein, the means for coupling (120, 220) is configured to couple the incident laser beam to the step-index multimode waveguide (110, 210) with an incidence angle $\alpha$ titled from the normal direction of the cross section towards the azimuthal direction of the step-index multimode waveguide (110, 210), wherein, $\alpha > 0°$, in particular $\alpha > 2°$.

6. The apparatus according to the preceding claim, wherein, the incidence angle $\alpha$ is determined to excite the whispering gallery modes of the step-index multimode waveguide (110, 210).

7. The apparatus according to any preceding claim, wherein, the means for coupling (120, 220) is configured to couple the incident laser beam to the step-index multimode waveguide (110, 210) at an incidence point within a range from approximately 0.6 of the core radius (R) to the core-cladding boundary of the step-index multimode waveguide (110, 210).

8. The apparatus according to any preceding claim, wherein approximately 75% of the power of the incidence laser beam is within a radius that is less than approximately 0.4 of the core radius of the step-index multimode waveguide (110, 210).

9. The apparatus according to any preceding claim, wherein, the step-index multimode waveguide (110, 210) comprises a near end and a far end, and wherein, the means for coupling (120, 220) is configured to couple the incident laser beam to the near end of the step-index multimode waveguide (110, 210), and n output beams are obtained at the far end of the step-index multimode waveguide (110, 210).

10. The apparatus according to any preceding claim, wherein the length of the step-index multimode waveguide (110, 210) is determined based on the number n.

11. The apparatus according to any preceding claim, wherein, the means for coupling (120, 220) comprises a single mode fiber.

12. The apparatus according to any preceding claim, further comprising:
a further single mode fiber (130, 230), configured to couple to the step-index multimode waveguide (110, 210) to receive an output beam.

13. The apparatus according to any preceding claim, comprising:

further means for coupling (240) a further incident laser beam onto the step-index multimode waveguide (210);
wherein, approximately 70% of the power of the further incident laser beam remains in said region during propagation in the step-index multimode waveguide (210);
and wherein, the length of the step-index multimode waveguide (210) is m'/n' of the Talbot distance corresponding to the wavelength of the further incident laser beam, wherein, m' and n' are coprime integer numbers.

14. The apparatus according to the preceding claim, wherein, n'=n.

15. A method, comprising:

coupling an incident laser beam onto a step-index multimode waveguide (110, 210) having a cylinder shape with a core radius (R) and a length (l);
wherein, approximately 70% of the power of the incident laser beam remains in a region where the distance to the radial center of the step-index multimode waveguide (110, 210) is higher than approximately 0.5 of the core radius (R) during propagation in the step-index multimode waveguide (110, 210);
and the length of the step-index multimode waveguide (110, 210) is m/n of the Talbot distance, wherein, m and n are coprime integer numbers, and the Talbot distance is related to the wavelength of the incident laser beam and the core radius of the step-index multimode waveguide (110, 210).

120     110     130

100

Fig. 1

210     230

220

240

200

Fig. 2

EP 4 478 100 A1

coupling an incident laser beam onto
a step-index multimode waveguide
having a cylinder shape with a core
radius (R) and a length (l) — 310

Fig. 3

$\frac{z_T}{8}$    $\frac{z_T}{4}$    $\frac{z_T}{3}$    $\frac{z_T}{2}$

Propagation Distance

Fig. 4

Fig. 5a

Fig. 5b

Fig. 5c

Fig. 6a

Fig. 6b

Europäisches
Patentamt

European
Patent Office

Office européen
des brevets

# EUROPEAN SEARCH REPORT

**Application Number**

EP 23 17 8785

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Baranova ET AL: "Talbot effect for whispering gallery modes and modes of tubular waveguides", , 7 May 1998 (1998-05-07), XP093103771, Retrieved from the Internet: URL:https://ieeexplore.ieee.org/stampPDF/getPDF.jsp?tp=&arnumber=680381&ref=aHR0cHM6Ly9pZWVleHBsb3JlLmllZWUub3JnL3hwbC9jb2o11LzU1NTEvcHJvY2VlZGluZz9pc251bWJlcj0xNDg3MSZzb3J0VHlwZT12b2wtb25seS1zZXEzEXEmcmVmaW5lbWVVudE5hbWU9QXV0aG9yJnJlZmluZW1lbnRzPUF1dGhvcjpOLkIuJTIwQmFyYW5vdmE=[retrieved on 2023-11-21] * 2nd column, penultimate paragraph * * figure 1 *  ----- | 1-15 | INV. G02B6/28 |
| A | MATIAS ERIKSSON ET AL: "Talbot self-imaging and two-photon interference in ring-core fibers", ARXIV.ORG, CORNELL UNIVERSITY LIBRARY, 201 OLIN LIBRARY CORNELL UNIVERSITY ITHACA, NY 14853, 16 September 2021 (2021-09-16), XP091057062, * the whole document *  ----- | 1-15 | |
| A | HAUTAKORPI M ET AL: "MODAL ANALYSIS OF THE SELF-IMAGING PHENOMENON IN OPTICAL FIBERS WITH AN ANNULAR CORE", APPLIED OPTICS, OPTICAL SOCIETY OF AMERICA, WASHINGTON, DC, US, vol. 45, no. 25, 1 September 2006 (2006-09-01), pages 6388-6392, XP001249787, ISSN: 0003-6935, DOI: 10.1364/AO.45.006388 * the whole document *  ----- | 1-15 | |

**TECHNICAL FIELDS SEARCHED (IPC)**

G02B

The present search report has been drawn up for all claims

| Place of search | Date of completion of the search | Examiner |
|---|---|---|
| The Hague | 21 November 2023 | Menck, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)